(19) Europäisches Patentamt

European Patent Office

Office européen des brevets

(11) Veröffentlichungsnummer: **0 407 628 B1**

(12) **EUROPÄISCHE PATENTSCHRIFT**

(45) Veröffentlichungstag der Patentschrift: **18.11.93**

(21) Anmeldenummer: **89112580.9**

(22) Anmeldetag: **10.07.89**

(51) Int. Cl.⁵: **F16C 39/06**

(54) **Verfahren und Einrichtung zur Elimination des Einflusses von periodischen Störgrössen mit bekannter, veränderlicher Frequenz.**

(43) Veröffentlichungstag der Anmeldung:
**16.01.91 Patentblatt 91/03**

(45) Bekanntmachung des Hinweises auf die
Patenterteilung:
**18.11.93 Patentblatt 93/46**

(84) Benannte Vertragsstaaten:
**AT BE CH DE FR GB LI NL SE**

(56) Entgegenhaltungen:
**EP-A- 0 170 016**
**DE-A- 3 120 691**
**FR-A- 2 336 603**
**GB-A- 2 129 582**

(73) Patentinhaber: **SIEMENS AKTIENGESELL-
SCHAFT
Wittelsbacherplatz 2
D-80333 München(DE)**

(72) Erfinder: **Jungkunz, Clemens, Dipl.-Ing.
Leuschweg 4
D-8520 Erlangen(DE)**
Erfinder: **Weihrich, Georg, Dr.-Ing.
Schleifweg 49
D-8525 Uttenreuth(DE)**
Erfinder: **Niemann, Martin, Dipl.-Ing.
Ratsberger Strasse 47
D-8520 Erlangen(DE)**
Erfinder: **Wohld, Dietrich, Dipl.-Ing.
Föhrenweg 25
D-8521 Bräuningshof(DE)**

## Beschreibung

Die Erfindung betrifft ein Verfahren zur Elimination des Einflusses von periodischen Störgrößen mit bekannter, veränderlicher Frequenz, welche insbesondere in Regelkreisen zwischen Stellglied und Regelstrecke angreifen. Derartige frequenzveränderliche Störgrößen sind beispielsweise bei Antrieben von konstruktionsbedingten Flußunsymmetrien in der Maschine herrührende drehzahlproportionale Momentenwelligkeiten oder bei elektromagnetisch gelagerten Rotoren ein von einer umlaufenden Umwuchtkraft verursachter periodischer Lagerlastanteil.

Solche Verfahren sind z.B. aus der DE-C-2 658 692 oder der EP-A-170 016 bekannt.

In der DE-C-26 58 692 wird bei einer magnetischen Rotorlagerung vorgeschlagen, die Wirkung einer solchen Unwuchtkraft mittels eines Regelkreises in einem transformierten, rotorfesten Koordinatensystem auszuregeln. Bei diesem Verfahren wird also der Einfluß der Unwuchtkraft im Wirkungskreislauf über die Regelstrecke durch den Regler beseitigt, was bedeutet, daß die von der periodischen Unwuchtkraft hervorgerufenen Lageänderungen erst einmal die Regelschleife durchlaufen müssen, ehe sie vom Lageregler beseitigt werden können. Mit diesem Verfahren kann nur mäßig schnellen Frequenzänderungen der Störgröße wirksam begegnet werden.

Die Erfindung stellt sich die Aufgabe, eine parallele, ohne Regelungs-Wirkungskreislauf über die Regelstrecke wirksame Störgrößenelimination anzugeben, mit der insbesondere bei Frequenzänderungen der Störgröße schneller reagiert werden kann.

Gelöst wird diese Aufgabe erfindungsgemäß mit den im Hauptanspruch angegebenen Maßnahmen.

Grundgedanke der Erfindung ist es also, ein von der Störgröße abhängiges Signal zu selektieren und aus dem selektierten Signal mittels komplexer Zeigerrechnung das zur Störgrößenaufschaltung erforderliche Korrektursignal zu bilden. Ein wesentlicher Vorteil, welcher sich mit der Erfindung ergibt, ist, daß sie völlig unabhängig von dem jeweils verwendeten Regelkreis arbeitet, d.h., daß sie ohne weiteres bereits vorhandenen Regelkreisen hinzugefügt bzw. daß eine Regelung völlig unabhängig von der erfindungsgemäßen Störgrößen-Elimination dimensioniert und aufgebaut werden kann.

Die Erfindung samt ihren weiteren Ausgestaltungen, darunter auch verschiedene Einrichtungen zur Durchführung des erfindungsgemäßen Verfahrens, welche in weiteren Patentansprüchen angegeben sind, sollen im folgenden anhand der Figuren näher beschrieben werden. Dabei zeigt:

Figur 1 ein grundsätzliche Blockdiagramm zu dem erfindungsgemäßen Verfahren,

Figur 2 die Anwendung der Erfindung bei einer Drehzahlregelung unter Verwendung eines Störgrößenbeobachters,

Figur 3 einen Störgrößenbeobachter, mit welchem neben der Grundschwingung auch noch eine weitere Oberschwingung beliebiger Ordnung nachgebildet werden kann,

Figur 4 die Anwendung der Erfindung bei einem elektromagnetisch gelagerten Rotor und

Figur 5 ein Diagramm zur Darstellung orthogonaler Unwuchtkomponenten bei einem elektromagnetisch gelagerten Rotor,

Figur 6 die Anwendung der Erfindung bei der Positionsregelung für die Anstellung eines Walzgerüstes.

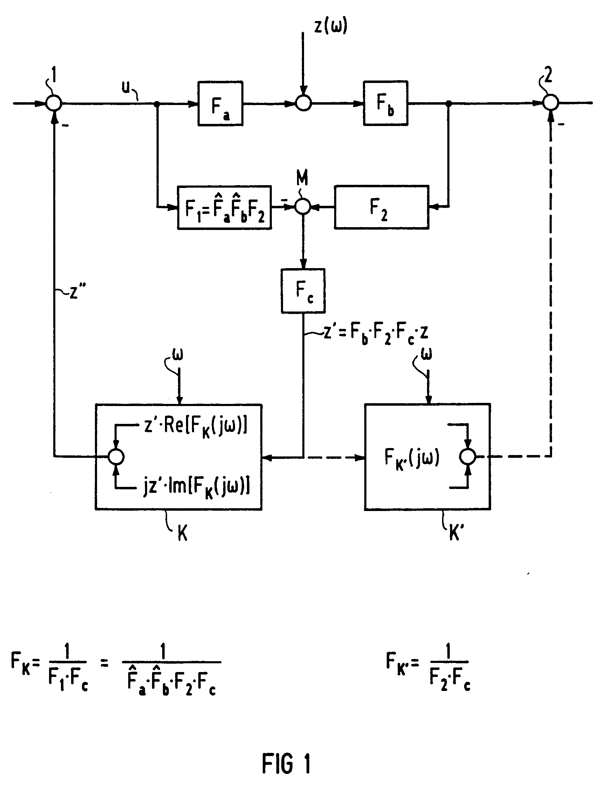

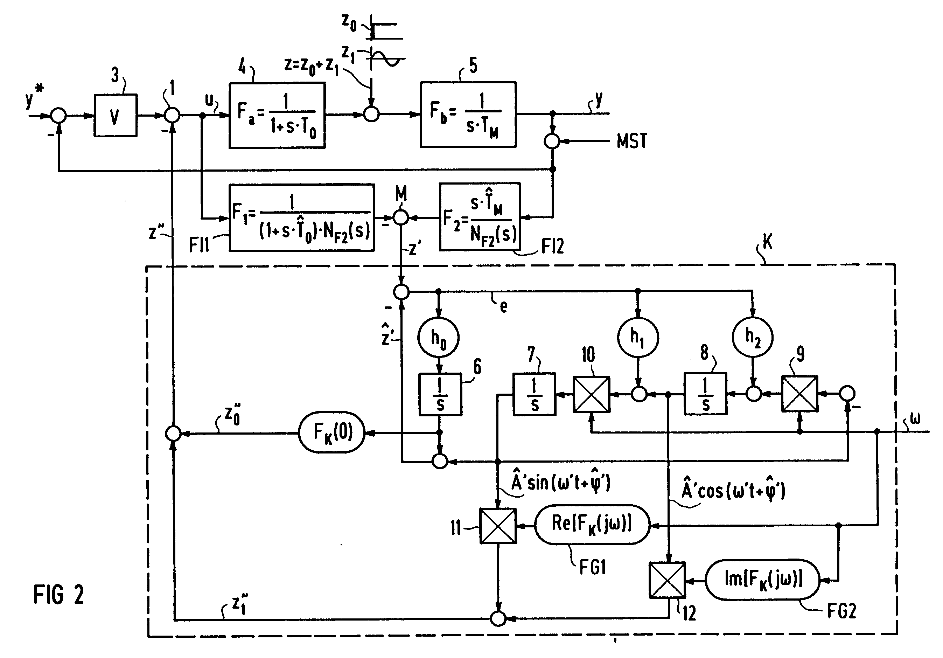

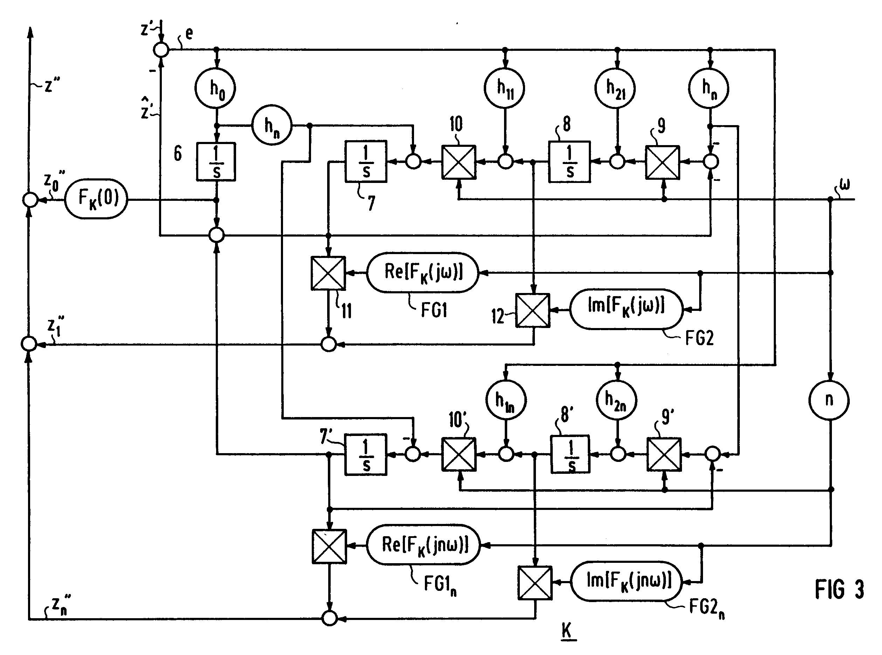

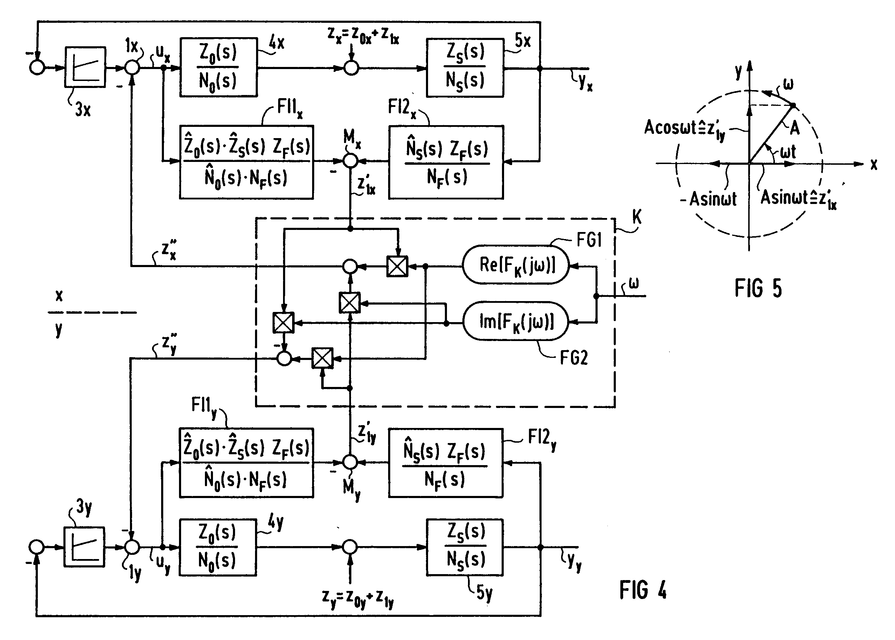

In dem das allgemeine Prinzip des erfindungsgemäßen Verfahrens verdeutlichenden Blockdiagramm der Figur 1 greift eine mit bekannter Kreisfrequenz $\omega$ periodische Störgröße $z = z(\omega)$ zwischen zwei Übertragungsgliedern an, welche die allgemeine Übertragungsfunktionen $F_a$ und $F_b$ aufweisen mögen. Im folgenden sind Übertragungsfunktionen, d.h. Funktionen des Laplace-Operators s, einheitlich mit F bezeichnet und unter mit einem "^" versehenen Werte bzw. Signale werden solche verstanden, mit welchen original vorhandene Größen bzw. Signale so gut als möglich nachgebildet werden. Zur Selektion der Störgröße z wird die Eingangsgröße des Übertragungsgliedes mit der Übertragungsfunktion $F_a$ und die Ausgangsgröße des Übertragungsgliedes mit der Übertragungsfunktion $F_b$ über zwei weitere Übertragungsglieder mit den Übertragungsfunktionen $F_1$ und $F_2$ einem Mischglied M zugeführt. Bei der Übertragungsfunktion $F_2$ kann es sich um eine beliebige, realisierbare Übertragungsfunktion handeln, welche jeweils an die im Einzelfall herrschenden Anforderungen angepaßt ist. Damit am Ausgang des Mischgliedes M ein nur von der Störgröße z abhängiges Signal auftritt, muß der über die Übertragungsglieder mit den Übertragungsfunktionen $F_a$, $F_b$ und $F_2$ auf den Eingang des Mischgliedes M gelangende Einfluß des Signales u kompensiert werden, was mittels der Übertragungsfunktion $F_1$ geschieht, welche so bemessen ist, daß sie aus dem Produkt der Überstragungsfunktionen $\hat{F}_a$, $\hat{F}_b$ und $F_2$ besteht. Die Ausgangsgröße des Übertragungsgliedes mit der Übertragungsfunktion $F_1$ wird mit negativem Wirkungssinn dem zweiten Eingang des Mischgliedes M zugeführt. $\hat{F}_a$ und $\hat{F}_b$ bedeuten dabei modellmäßig vorgenommene Nachbildungen der tatsächlich vorhandenen Übertragungsfunktionen $F_a$ und $F_b$. Auf diese Weise ist das gegebenenfalls über ein weiteres Übertragungsglied mit der Übertragungsfunktion $F_c$ geführte Ausgangssignal des Mischgliedes M ein ausschließlich von der Störgröße z abhängiges Signal z', für welches bei der Annahme, daß $\hat{F}_a = F_a$ und $\hat{F}_b = F_b$ ist, die Beziehung gilt

$$z' = F_b \cdot F_2 \cdot F_c \cdot z.$$

Für den Fall, daß die Übertragungsfunktionen $\hat{F}_a$ bzw. $\hat{F}_b$ instabile bzw. in ihren Eigenbewegungen zu langsame Pole aufweisen, ist es zweckmäßig, diese unerwünschten Pole als Nullstellen in der Übertragungsfunktion $F_2$ zu realisieren, so daß sie sich formal gegen die lagegleichen, hinzugefügten Nullstellen von $F_2$ innerhalb $F_1$ herauskürzen und daher in $F_1$ nicht realisiert werden müssen. Im übrigen sind die Übertragungsfunktionen $F_2$ und $F_c$ so zu wählen, daß die selektierte Größe z' einerseits möglichst schnell auch bei eventuellen Parameterungenauigkeiten einschwingt und andererseits Meßstörungen von z' ferngehalten werden.

Damit aus dieser so selektierten Größe z' ein Signal gewonnen werden kann, welches nach seiner Aufschaltung im Summationspunkt 1 die Störgröße z kompensiert, muß für die selektierte Größe z' ein weiteres Übertragungsglied vorgesehen werden, welches die Übertragungsfunktion

$$F_K = \frac{1}{F_1 \cdot F_c} = \frac{1}{\hat{F}_a \cdot \hat{F}_b \cdot F_2 \cdot F_c}$$

aufweisen sollte. Unter Berücksichtigung der Tatsache, daß jede der im Nenner von $F_k$ angegebenen einzelnen Übertragungsfunktionen realisierbar ist, d.h. daß deren Zählerordnung jeweils um mindestens einen Grad niedriger als die Ordnung ihres Nenners ist, wäre aber eine solche gewünschte Übertragungsfunktion mit üblichen Bauelementen nicht realisierbar, denn die Ordnung ihres Zählerpolynoms wäre größer als die Ordnung ihres Nennerpolynoms.

Im Hinblick darauf, daß sowohl die Störgröße z als auch das selektierte Signal z' periodische, sinusförmige Größen sind, deren Frequenz bekannt und damit verfügbar ist, wurde erkannt, daß es dennoch möglich ist, das gewünschte Übertragungsverhalten für die jeweils aktuelle Frequenz zu realisieren, indem Real- und Imaginärteil des komplexen Frequenzganges der gewünschten Übertragungsfunktion in Abhängigkeit vom jeweiligen Wert der Frequenz $\omega$ bereitgestellt, d.h. entweder berechnet oder in einem Speicher abrufbereit hinterlegt werden, und mindestens ein den Grundschwingungsanteil des selektierten Signals z' entsprechendes sowie ein diesem gegenüber um 90° phasenvoreilendes Signal damit amplitudengewichtet und diese beiden amplitudengewichteten Signale sodann addiert werden. Der komplexe Frequenzgang ergibt sich dabei in bekannter Weise aus der Übertragungsfunktion, wenn man in letzterer den Laplace-Operator s durch die komplexe Frequenz $j\omega$ ersetzt. Das selektierte Signal z' wird nun dementsprechend in dem mit K bezeichneten Übertragungsblock diesen Operationen unterworfen, d.h. aus der sinusförmig verlaufenden Größe z' wird ein um 90° phasenvoreilendes Signal $jz'$ gebildet. Wäre das Signal z' beispielsweise von der Form

$$z' = z'_{max} \cdot \sin \omega t,$$

dann hätte nach den Regeln der komplexen Zeigerrechnung ein diesem um 90° voreilendes Signal die Gestallt

$$z' \cdot e^{j \cdot 90°} = j \cdot z' = z'_{max} \cdot \cos \omega t.$$

Real- und Imaginärteil des komplexen Korrekturfrequenzgangs

$$F_K(j\omega) = \frac{1}{\hat{F}_a(j\omega) \cdot \hat{F}_b(j\omega) \cdot F_2(j\omega) \cdot F_c(j\omega)}$$

werden entsprechend dem jeweilig aktuellen Wert der Frequenz ermittelt und mit den Signalen z' bzw. j . z' multipliziert. Das Ergebnis besteht in der Ausgangsgröße z″ der Korrektureinrichtung K, mit welcher durch Aufschaltung am Summierpunkt 1 die jeweils wirkende Störgröße z(ω) an ihrem Angriffsort exakt kompensiert werden kann.

Soll das selektierte Signal z' nicht störgrößenkompensierend, sondern störgrößenausblendend - z.B. zur Gewinnung eines störgrößenfreien Regelungsistwertes - am Summierpunkt 2 aufgeschaltet werden, so wird dieses einer mit K' bezeichneten Korrektureinrichtung zugeführt, welche analog in der vorstehend beschriebenen Weise den komplexen Korrekturfrequenzgang

$$F_K'(j\omega) = \frac{1}{F_2(j\omega) \cdot F_c(j\omega)}$$

frequenzselektiv realisiert.

Von wesentlicher Bedeutung für die Genauigkeit der Störgrößenkompensation ist, daß in der den Summierpunkt 1, die Übertragungsglieder mit den Übertragungsfunktionen $F_1$ und $F_c$ sowie die Korrektureinrichtung K enthaltenden Signalschleife für die aktuelle Frequenz der zu kompensierenden Störung eine Kreisverstärkung vom Wert 1 und eine Phasendrehung vom Wert 0° besteht. Dadurch werden Parameterungenauigkeiten, z.B. Nachbildungsfehler der Übertragungsfunktionen $\hat{F}_a$ und $\hat{F}_b$ ausgeglichen.

Figur 2 zeigt die Anwendung des erfindungsgemäßen Verfahrens am Beispiel einer Drehzahlregelung. Die Ausgangsgröße des als Proportionalverstärker mit der Verstärkung V ausgebildeten Drehzahlreglers 3 wirkt auf das Stellglied 4, welches die Übertragungsfunktion $F_a = 1 / (1 + sT_0)$ eines Verzögerungsgliedes erster Ordnung mit der Zeitkonstanten $T_0$ aufweist, welches seinerseits einen mit 5 bezeichneten Antriebsmotor mot dem Übertragungsverhalten $F_b = 1 / s . T_M$ beaufschlagt. Der zum Eingang des Drehzahlreglers 3 rückgeführten Regelgröße y, welche in der Drehzahl des Motors 5 besteht, sei noch eine mit MST bezeichnete Meßwertstörung überlagert. Zwischen Stellglied 4 und Antriebsmotor 5 greift die Störgröße z an, welche sich, wie in Figur 2 angedeutet, aus einem Gleichanteil $z_0$ und einem periodischen, in seiner Frequenz von der jeweils vorliegenden Antriebsdrehzahl y abhängigen Anteil $z_1$ zusammensetzt. Die Störgröße z kann also allgemein folgendermaßen beschrieben werden

$z = z_0 + z_1 = z_0 + A\sin(\omega t + \phi)$,

wobei A die Amplitude und $\omega t + \phi$ die Phase der periodischen Störung bedeuten ($\omega$ = Kreisfrequenz).

Der erste Schritt des erfindungsgemäßen Verfahrens erfordert die Selektion eines nur von der Störgröße z abhängigen Signals z'. Es wird daher die Eingangsgröße u des Stellgliedes 4 über ein erstes Filter FI1 einem Mischglied subtraktiv und die Ausgangsgröße der aus dem Antriebsmotor 5 bestehenden Regelstrecke diesem Mischglied M über ein zweites Filter FI2 additiv zugeführt. Wie im Zusammenhang mit der prinzipiellen Wirkungsweise gemäß Figur 1 schon erwähnt, müssen die beiden Filter FI1 und FI2 so bemessen sein, daß die Eingangsgröße u des Stellgliedes 4 am Ausgang des Mischgliedes M keine Wirkung hervorzurufen vermag, so daß dort nur ein von der Störgröße z abhängiges Signal z' auftritt. Demzufolge muß die Übertragungsfunktion $F_1$ des ersten Filters FI1 gleich dem Produkt aus der Übertragungsfunktion $F_2$ des zweiten Filters FI2 und der Übertragungsfunktion $F_a . F_b$ von der Eingangsgröße u bis zur Ausgangsgröße der Regelstrecke 5 bemessen sein. Dabei ist man in der Wahl der Übertragungsfunktion $F_2$ des Filters FI1 frei und kann diese den jeweiligen Erfordernissen anpassen.

Wie schon erwähnt, ist es zweckmäßig, mit dem Zähler der Übertragungsfunktion $F_2$ den Nenner der Übertragungsfunktion der Regelstrecke 5 zu kompensieren. Der Zähler der Übertragungsfunktion $F_2$ erhält daher die Form $s . \hat{T}_M$, wobei mit dem Koeffizienten $\hat{T}_M$ die Motorzeitkonstante $T_M$ des Antriebsmotors 5 nachgebildet werden soll. Damit die Übertragungsfunktion $F_2$ realisierbar ist, ist es erforderlich, daß die Ordnung ihres Nennerpolynoms $N_{F2}(s)$ mindestens einen Grad größer ist als die Ordnung ihres Zählers. Im dargestellten Beispiel kann daher für das Nennerpolynom $N_{F2}(s)$ der Übertragungsfunktion $F_2$ angesetzt werden:

$$N_{F2}(s) = a_0 + a_1 s + s^2,$$

wobei die Koeffizienten $a_0$ und $a_1$ so bemessen werden können, daß die Meßwertstörung MST im interessierenden Frequenzbereich hinreichend unterdrückt wird. Mit der Festlegung des Übertragungsverhaltens $F_2 = s \cdot \hat{T}_M / N_{F2}(s)$ des Filters FI2 ergibt sich die Übertragungsfunktion $F_1$ des Filters FI1 zu $F_1 = 1 / ((1 + s\hat{T}_0) \cdot N_{F2}(s))$ und zwischen Störgröße z und dem am Ausgang des Mischgliedes M selektierten Signal z′ besteht dann bei hinreichend guter Nachbildung der Motorzeitkonstanten $T_M$ die Übertragungsfunktion z′/z = $1/N_{F2}(s)$.

Wenn zwischen dem am Ausgang des Mischgliedes M selektierten Signal z′ und dem am Summierpunkt 1 zugeführten Signal Z″ die Übertragungsfunktion

$$F_K = \frac{1}{F_1} = (1 + s\hat{T}_0) \cdot N_{F2}(s)$$

vorgesehen wird, dann kann eine exakte Kompensation der jeweils auftretenden Störgröße z an ihrem Angriffsort erreicht werden. Hierzu dient das Korrekturglied K, welches den hierzu erforderlichen komplexen Korrekturfrequenzgang $F_K(j\omega)$ bereitstellt.

Das Korrekturglied K besteht beim dargestellten Beispiel aus einem drei Integratoren 6, 7 und 8 enthaltenden Störgrößenbeobachter und zwei mit FG1 und FG2 bezeichnete Funktionsgeneratoren, mit welchen eine Amplitudengewichtung der sinus- bzw. cosinusförmigen Ausgangssignale des Störgrößenbeobachters zur frequenzselektiven Realisierung des Korrekturfrequenzganges $F_K$ vorgenommen wird. Mit dem aus den Integratoren 6 bis 8 bestehenden Störgrößenbeobachter soll die dem Korrekturglied K zugeführte selektive Größe z′ vollständig, d.h. sowohl bezüglich ihres Gleichanteils $z_0$ als auch bezüglich ihres Wechselanteils $z_1$ nachgebildet werden. Dieses nachgebildete Signal ist mit $\hat{z}′$ bezeichnet. Der den Gleichanteil des selektierten Signals z′ nachbildende Integrator 6 sowie die beiden anderen in Reihe angeordneten und zu einem Schwingungsglied rückgekoppelten Integratoren 7 und 8 werden in an sich üblicher Weise vom Fehlersignal e, d.h. der Differenz zwischen zugeführten Signal z′ und nachgebildetem Signal $\hat{z}′$ nach Maßgabe der Koeffizienten $h_0$, $h_1$ und $h_2$ so nachgeführt, daß Übereinstimmung zwischen dem Signal z′ und seiner Nachbildung $\hat{z}′$ besteht und das Fehlersignal e zu Null wird. Die Frequenz des aus den Integratoren 7 und 8 bestehenden Schwindungsgliedes wird von der den Integratoren 7 und 8 multiplikativ zugeführten Größe $\omega$ bestimmt, welche entweder proportional dem Istwert der Regelgröße, nämlich der Drehzahl y des Motors 5 oder proportional dem Drehzahlsollwert y* gewählt werden kann. Der Nachführkoeffizient $h_1$ wirkt frequenzbewichtet auf den Eingang des zweiten Integrators 7. Wenn bezüglich der Bemessung der Nachführkoeffizienten $h_0$, $h_1$ und $h_2$ die Beziehung $h_2 = h_1 \cdot h_0$ eingehalten wird, dann läßt sich mit $h_0$ ein Beobachterpol bei $s = -h_0$ festlegen. Der Rückführkoeffizient $h_1$ bestimmt die Dämpfung $D = h_1/2$ des Beobachters. Diese ist bei der in Figur 2 dargestellten Ausführung des Störgrößenbeobachters infolge der Frequenzbewichtung des Rückführkoeffizienten $h_1$ für alle Frequenzen konstant, wobei diese Ausführung auch noch den Vorteil aufweist, daß die Rückführkoeffizienten $h_0$ und $h_1$ unabhängig von der Störfrequenz $\omega$ als beliebig wählbare Konstantwerte festgelegt werden können.

Am Ausgang des Integrators 7 entsteht ein den Wechselanteil der selektierten Größe z′ nachbildendes sinusförmiges Signal $\hat{A}′ \sin(\omega t + \hat{\phi}′)$, welches addiert zum vom Integrator 6 nachgebildeten Gleichanteil des selektierten Signals z′ die diesem Signal nachgebildete Größe $\hat{z}′$ ergibt. Am Ausgang des dem Integrator 7 vorgeordneten Integrators 8 entsteht ein dem Wechselanteil der selektierten Größe z′ um 90° phasenvoreilendes Signal der Form $\hat{A}′\cos(\omega t + \hat{\phi}′)$. Die Ausgangssignale der Integratoren 7 und 8 werden nun zur Realisierung des zur Kompensation erforderlichen Korrekturfrequenzgangs $F_K(j\omega)$ mit den Ausgangssignalen von mit der Frequenz $\omega$ gesteuerten Funktionsgeneratoren FG1 und FG2 amplitudengewichtet, was unter Verwendung zweier Multiplizierer 11 bzw. 12 erfolgt. Beim Beispiel der Figur 2 realisiert der Funktionsgenerator FG1 bei dem zugrundegelegten Nennerpolynom von $N_{F2}(s) = a_0 + a_1 \cdot s + s^2$ mit $s = j\omega$ dessen Realteil, d.h. die Funktion

$$Re[F_K(j\omega)] = a_0 - (1 + a_1 \cdot \hat{T}_0) \cdot \omega^2$$

und der Funktionsgenerator FG2 dessen Imaginärteil, d.h. die Funktion

$$\text{Im}[F_K(j\omega)] = (a_0 \cdot \widehat{T}_0 + a_1) - \widehat{T}_0 \omega^3.$$

Bei den Funktionsgeneratoren FG1 und FG2 kann es sich um analoge Rechenschaltungen handeln; beim heutigen Stand der Technik lassen sich diese auch mit handelsüblichen digitalen Signalprozessoren verwirklichen, beispielsweise mit dem Signalprozessor TMS320xx der Firma Texas Instruments. Die Ausgangssignale der Multiplizierer 11 und 12 werden addiert und dem so entstehenden Summensignal $z_1''$, welches dem frequenzgangkorrigierten Wechselanteil des selektierten Signals $z'$ entspricht, wird noch ein entsprechender, vom Ausgangssignal des Integrators 6 abgeleiteter Gleichanteil $z_0''$ hinzuaddiert, womit dann das zur Störgrößenaufschaltung erforderliche Signal $z''$ erhalten wird. Der Faktor $F_K(0)$, mit dem die Ausgangsgröße des Integrators 6 bewichtet wird, ergibt sich aus dem Wert des Korrekturfrequenzgangs $F_K(j\omega)$ für $\omega = 0$ und hätte beim gewählten Beispiel den Wert $a_0$.

Figur 3 zeigt eine Ausbildung des Korrekturgliedes K, mit welcher zusätzlich zum Grundschwingungsanteil der selektierten Größe $z'$ noch eine weitere, höher harmonische Oberschwingung aus deren Frequenzspektrum nachgebildet und entsprechend korrigiert zur Verfügung gestellt werden kann. Der Störgrößenbeobachter wird dementsprechend um ein zusätzliches Integratorpaar 7', 8' erweitert, welches in gleicher Weise wie das ursprüngliche Integratorpaar 7, 8 vom Fehlersignal e nachgeführt wird und statt mit der Frequenz $\omega$ mit den n-fachen Frequenz $n \cdot \omega$ vorgesteuert ist. Analog ist die Bemessung der Nachführkoeffizienten, d.h. es gilt $h_{21} = h_{11} \cdot h_0$ und $h_{2n} = h_{1n} \cdot h_0$, wobei mit dem Wert von $h_{11} = 2D$ die Dämpfung D der Grundschwingung und mit dem Wert $h_{1n} = 2D_n$ die für (n-1)te Oberschwingung vorgesehene Dämpfung $D_n$ festlegbar ist. Auf die Eingänge sämtlicher Integratoren kommt nun ein weiteres, dem Fehlersignal e mit dem Faktor $h_n$ proportionales Nachführsignal zur Wirkung, wobei dieses Signal bei den beiden jeweils das phasenvoreilende Signal nachbildenden Integratoren 8, 8' frequenzbewichtet und bei den beiden übrigen Integratoren 7, 7' mit dem Nachführkoeffizienten $h_0$ des den Gleichanteil nachbildenden Integrators 6 bewichtet zur Wirkung gebracht ist. Dieser Faktor $h_n$ wird für die (n-1)te Oberschwingung zu

$$h_n = \frac{n}{n^2 - 1} \cdot h_{11} \cdot h_{1n} \qquad \text{mit } n = 2, 3 \ldots$$

bemessen. Funktion und Wirkungsweise der beiden Funktionsgeneratoren $FG1_n$ und $FG2_n$ sind entsprechend wie bei den Funktionsgeneratoren FG1 und FG2. Der Unterschied besteht nur darin, daß bei den von ihnen zu bildenden Funktionen statt der Variablen $\omega$ die Variable $n \cdot \omega$ auftritt, da ja nun Real- und Imaginärteil des komplexen Frequenzganges $F_K(jn \cdot \omega)$ bereitzustellen sind.

Figur 4 zeigt eine Anwendung des erfindungsgemäßen Verfahrens bei der Lageregelung eines unwuchtbehafteten, elektromagnetisch gelagerten Rotors in zwei zueinander senkrechten Achsen x bzw. y. Es ist für die Regelung längs jeder Achse ein Regelkreis vorgesehen, bestehend aus den Positionsreglern 3x bzw. 3y, den Stellgliedern 4z bzw. 4y und den Regelstrecken 5x bzw. 5y. Es ist also im Prinzip dieselbe Anordnung wie bei der Figur 2 für jede Achse vorhanden und die periodische Störung kann in entsprechender Weise in zwei rechtwinklig zueinander stehenden Achsen in den Mischgliedern $M_x$ bzw. $M_y$ zu $z'_{1x}$ und $z'_{1y}$ selektiert werden. Die Bemessung der Filter $FI1_x$ und $FI2_x$ bzw. $FI1_y$ und $FI2_y$ erfolgt in der bisher beschriebenen Weise. Insbesondere wird bei der Anordnung gemäß Figur 4 mit dem Zählerpolynom der Übertragungsfunktionen der Filter $FI2_x$ bzw. $FI2_y$ das Nennerpolynom $N_S(s)$ der jeweiligen Regelstrecken 5x bzw. 5y kompensiert. Zusätzlich dazu enthalten die Nenner dieser Übertragungsfunktionen mit dem Term $Z_F(s)$ einen Anteil, mit welchem jeweils der Gleichanteil der in x- und in y-Richtung auftretenden Störkomponente $z_{0x}$ bzw. $z_{0y}$ unterdrückt wird. Diese Gleichanteile können entweder mit den im Beispiel der Figur 4 als PI-Regler ausgebildeten Lagereglern 3x bzw. 3y ausgeregelt werden oder bei einer Zustandsregelung vom Beobachter nachgebildet und von dort her kompensierend aufgeschaltet werden.

Wie mit der Figur 5 verdeutlicht werden soll, ist die Ursache der Störgröße eine mit der Kreisfrequenz $\omega$ umlaufende Unwucht, und in den zwei zueinander senkrechten Achsen x und y werden ihre zueinander senkrechten Komponenten $z_{1x}$ bzw. $z_{1y}$ meßtechnisch erfaßt bzw. zu den Signalen $z'_{1x}$ bzw. $z'_{1y}$ selektiert. Damit stehen die für die erfindungsgemäße Frequenzgangkorrektur erforderlichen Grundschwingungsanteile samt den diesen gegenüber um 90° phasenvoreilenden Signalen bereits schon zur Verfügung, denn zu dem Grundschwingungsanteil am Ausgang des einen Mischgliedes $M_x$ bzw. $M_y$ liefert das der anderen Achse zugeordnete Mischglied $M_y$ bzw. $M_x$ den dazu um 90° phasenvoreilenden Schwingungsanteil. Es ist deshalb der in Figur 2 verwendete Störgrößenbeobachter nicht erforderlich, und die Ausgangssignale der Mischglieder $M_x$ und $M_y$ können jeweils direkt von den zwei Funktionsgeneratoren FG1 und FG2 in der in Figur 4 angegebenen Weise beaufschlagt werden und entsprechend addiert die Aufschaltsignale $z_x''$ bzw. $z_y''$ bilden. Von den Funktionsgeneratoren FG1 und FG2 ist bei dem in Figur 4 dargestellten Beispiel Real- bzw. Imaginärteil des komplexen Korrekturfrequenzgangs

$$F_K(j\omega) \ = \ \hat{N}_0(j\omega) \ . \ N_F(j\omega) \ / \ (\hat{Z}_0(j\omega) \ . \ \hat{Z}_S(j\omega) \ . \ Z_F(j\omega))$$

bereitzustellen.

Für den Fall, daß man bei der Anordnung nach Figur 4 darauf verzichten will, durch periodische Stellgliedbetätigungen die periodische Störgröße von der Regelstrecke fernzuhalten und sich statt dessen darauf beschränken möchte -vorausgesetzt die Lagerluftspaltschwankungen verbleiben innerhalb ihrer Toleranz - Stellgliedreaktionen auf die Störgröße zu unterbinden, würden in Abweichung vom Ausführungsbeispiel der Figur 4 die selektierten Signale $z_{1x}'$ und $z_{1y}'$ nicht störgrößenkompensierend vor dem Angriffsort der Störgröße, sondern störgrößenausblendend in der Ausgangsgröße $Y_x$ bzw. $Y_y$ der Regelstrecke 5x bzw. 5y zur Wirkung gebracht, wie es im grundsätzlichen Blockschaltbild der Figur 1 der gestrichelt eingezeichneten Version entspricht. Die Funktionsgeneratoren FG1 und FG2 des Korrekturgliedes K müßten dann Real- und Imaginärteil des Korrekturfrequenzgangs

$$F_K(j\omega) \ = \ N_F(j\omega) \ / \ (\hat{N}_S(j\omega) \ . \ Z_F(j\omega))$$

bilden. Mit dieser Variante wäre im Bereich der Rotordrehfrequenz ein sogenanntes "weiches Lager" realisiert, während die in Figur 4 gezeigte Version ein "starres Lager" für einen elektromagnetisch gelagerten Rotor darstellt.

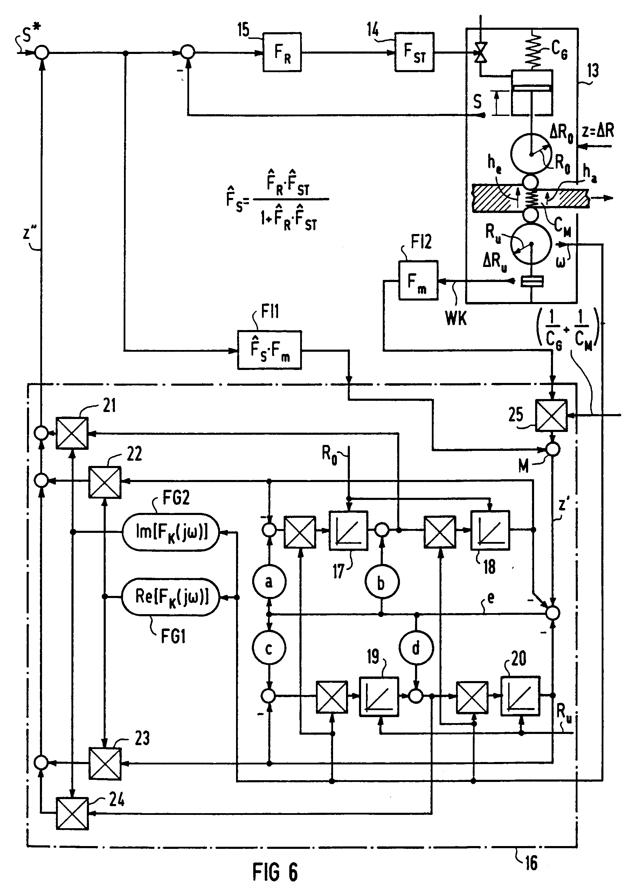

Figur 6 zeigt eine Positionsregelung für die Anstellung bei einem schematisch dargestellten Walzgerüst 13. Dieses besteht aus einer oberen Stützwalze mit dem Radius $R_0$, einer unteren Stützwalze mit dem Radius $R_u$, den beiden im Durchmesser kleineren Arbeitswalzen, einem die Verstellung der oberen Stützwalze bewirkenden Hydraulikkolben und einem dazugehörenden Hydraulikzylinder, welcher sich auf dem Gerüstrahmen abstützt. Der elastische Gerüstrahmen ist symbolisch durch eine Feder mit der Federkonstanten $C_G$ dargestellt. Das Walzgut, dem im Walzspalt eine äquivalente Materialfeder mit der Federkonstanten $C_M$ zugeordnet ist, wird mittels der beiden Arbeitswalzen von der Einlaufdicke $h_e$ auf die Auslaufdicke $h_a$ heruntergewalzt. Die Walzenexzentrizität der oberen bzw. der unteren Stützwalze haben ihre Ursache in ungleichmäßiger Walzenabnutzung, Verformungen durch Wärmespannungen und in Abweichungen der geometrischen Zylinderachsen der Walzen von den betrieblich sich einstellenden Rotationsachsen. Sie sind mit $\Delta R_0$ bzw. $\Delta R_u$, d.h. als Abweichungen von den idealen Stützwalzenhalbmessern $R_0$ bzw. $R_u$ bezeichnet. Die Summe der Einflüsse dieser Abweichungen kann als (Gesamt) Walzenexzentrizität $\Delta R$ bezeichnet werden und stellt eine periodisch wirkende Störgröße z dar. Vorgesehen sind Meßwertgeber für die Stützwalzendrehzahl $\omega$, üblicherweise in Form eines mit dem Antriebsmotor gekuppelten Tachodynamos, für die von dem Hydraulikkolben ausgeübte Walzkraft WK und für die Walzenanstellposition, welche der Relativposition S des die obere Stützwalze verstellenden Hydraulikkolbens entspricht. Mit 14 ist ein Ansteuerglied bezeichnet, mittels welchem der Hydraulikkolben über ein Ventil mit Drucköl beaufschlagt wird. Das Stellsignal für das Ansteuerglied 14 besteht im Ausgangssignal eines Positionsreglers 15, dessen Sollwert das Signal S* ist. In der europäischen Patentschrift EP 170 016 B1 ist u.a. vorgeschlagen, bei einer derartigen Positionsregelung das Meßwertsignal S, das der Walzkraft WK entsprechende Meßwertsignal und das Drehzahlmeßsignal $\omega$ einem Walzenexzentrizitätskompensator, dort mit RECO bezeichnet, zuzuführen und das Ausgangssignal dieses Kompensators vom Meßwertsignal S zu subtrahieren. Eine ausreichende Kompensation des Einflusses von Walzenexzentrizitäten kann damit nur dann gelingen, wenn hinreichend kleine Meßwertglättungen und eine dynamisch äußerst hochwertige Anstellhydraulik vorausgesetzt werden können.

Die Figur 6 zeigt die erfindungsgemäße Ertüchtigung des bekannten Walzenexzentrizitätskompensators zur exakten Elimination des Einflusses von Walzenexzentrizitäten für die Fälle, in denen diese Voraussetzungen nicht gegeben sind. Diese besteht neben einer anderen eingangsseitigen Signalbeaufschlagung des Walzenexzentrizitätskompensators darin, daß die Ausgangssignale der die Walzenexzentrizität $\Delta R$ modellmäßig nachbildenden Integratorpaare 17, 18 bzw. 19, 20 jeweils Multiplizierern 21, 22, 23, 24 zugeführt sind und die zweiten Eingänge dieser Multiplizierer von frequenzgesteuerten Funktionsgeneratoren FG1, FG2 für Real- und Imaginärteil des Korrekturfrequenzganges beaufschlagt sind. Die Summe der Ausgangssignale der Multiplizierer wird dann dem Sollwert S* des Positionsreglers 15 aufgeschaltet.

Eingangsseitig wird der Walzenexzentrizitätskompensator 16 von den Ausgangssignalen zweier Filter FI1 und FI2 beaufschlagt. Das Filter FI2 ist ein Glättungsfilter für den Meßwert der Walzkraft WK mit der Übertragungsfunktion $F_m$. Die Eingangsgröße des Positionsregelkreises wird über das Filter FI1 mit der Übertragungsfunktion $\hat{F}_s . F_m$ geführt, wobei $\hat{F}_s = \hat{F}_R . \hat{F}_{ST}/(1 + \hat{F}_R . \hat{F}_{ST})$ die nachgebildete Übertragungsfunktion des Positionsregelkreises ist, wo $\hat{F}_R$ und $\hat{F}_{ST}$ die nachgebildeten Übertragungsfunktionen von Positionsregler 15 bzw. Stellglied 14 sind. Da das Ausgangssignal des Filters FI2 mittels des Multiplizierers 25 mit der Summe der Kehrwerte der Gerüstfederkonstanten $C_G$ und der Materialfederkonstanten $C_M$ bewichtet ist und somit das Übertragungsverhalten des Walzspalts kompensiert wird, erscheint am Ausgang des Mischgliedes die Größe z′, welche allein von der jeweils wirkenden Störgröße, d.h. der Exzentrizität $\Delta R$, abhängig ist. Diese Größe z′ wird dann von dem aus den Integratoren 17, 18 bzw. 19,20 bestehenden Störgrößenbeobachter in bekannter Weise nachgebildet und mittels der Funktionsgeneratoren FG1 und FG2 sowie der Multiplizierer 20 bis 23 in bereits geschilderter Weise dem Korrekturfrequenzgang

$$F_K(j\omega) = \frac{1}{\hat{F}_s(j\omega) . \hat{F}_m(j\omega)}$$

frequenzselektiv unterworfen. Die Ausgangsgröße z″ wird dann dem Sollwert S* des Positionsregelkreises in die Störgröße z kompensierende Weise aufgeschaltet.

**Patentansprüche**

1. Verfahren zur Elimination des Einflusses von periodischen Störgrößen mit bekannter, veränderlicher Frequenz, welche insbesondere in Regelkreisen zwischen Stellglied und Regelstrecke angreifen, **dadurch gekennzeichnet** daß

a) ein erstes, vor dem Angriffsort der Störgröße (z) abgegriffenes Signal, mit negativem Wirkungssinn über ein erstes Filter und ein zweites, nach dem Angriffsort der Störgröße abgegriffenes Signal über ein zweites Filter einem Mischglied (M) zugeführt werden, wobei die Übertragungsfunktionen des ersten und des zweiten Filters so bemessen sind, daß ein nur von der Störgröße (z) abhängiges Signal entsteht, und daß

b) mindestens der Grundschwingungsanteil des selektierten Signals (z') und ein diesem gegenüber um 90° phasenvoreilendes Signal in einem Korrekturglied (K,K') mit dem dort jeweils frequenzabhängig bereitgestellten, entweder berechneten oder in einem Speicher aufrufbereit hinterlegten Real- bzw. Imaginärteil eines komplexen Korrekturfrequenzgangs ($F_K(j\omega)$ bzw. FK(j$\omega$)) amplitudengewichtet werden, und die Summe dieser Signale (z'') entweder störgrößenkompensierend vor dem Abgriffsort des ersten Signals oder störgrößenausblendend nach dem Abgriffsort des zweiten Signals aufschaltbar ist, wobei der komplexe Korrekturfrequenzgang ($F_K(j\omega)$ bzw. $F_{K'}(j\omega)$) durch die Übertragungsfunktion vom Mischgliedausgang bis zum Eingang des Korrekturgliedes (K bzw. K') und durch die Übertragungsfunktion des ersten Filters (FI1) bei störgrößenkompensierender Aufschaltung bzw. die Übertragungsfunktion des zweiten Filters (FI2) bei störgrößenausblendender Aufschaltung bestimmt ist.

2. Verfahren nach Anspruch 1, **dadurch gekennzeichnet,** daß der Gleichanteil ($z_0''$) des selektierten Signals (z') störgrößenkompensierend vor dem Abgriffsort des ersten Signals aufgeschaltet wird.

3. Einrichtung zur Durchführung des Verfahrens nach Anspruch 1 oder 2, **gekennzeichnet** durch folgende Merkmale:

a) Die Eingangsgröße (u) des Stellgliedes beaufschlagt mit negativem Wirkungssinn über ein erstes Filter (FI1) und die Ausgangsgröße (y) der Regelstrecke über ein zweites Filter (FI2) ein Mischglied (M), wobei die Übertragungsfunktion ($F_1$) des ersten Filters gleich dem Produkt aus der Übertragungsfunktion ($F_2$) des zweiten Filters und der Übertragungsfunktion vom Eingang des Stellgliedes bis zum Ausgang der Regelstrecke bemessen ist;

b) zur Nachbildung von Sinus- und Kosinuskomponenten der Grundschwingung des Ausgangssignals (z') des Mischgliedes (M) enthält das Korrekturglied (K) einen von diesem angesteuerten Störgrößenbeobachter mit zwei in Reihe angeordneten, zu einem Schwingungsglied rückgekoppelten Integratoren (7,8), deren Ausgangssignale jeweils einem Multiplizierer (11,12) zugeführt sind, wobei die anderen Eingänge der Multiplizierer von frequenzgesteuerten Funktionsgeneratoren

8

(FG1,FG2) für den Real- bzw. Imaginärteil des Korrekturfrequenzganges ($F_K(j\omega)$,$F_{K'}(j\omega)$) beaufschlagt sind und die Summe der Ausgangssignale der beiden Multiplizierer zur Störgrößenaufschaltung einem Summierglied zugeführt sind und wobei der komplexe Korrekturfrequenzgang ($F_K(j\omega)$ bzw.$F_{K'}(j\omega)$) durch die Übertragungsfunktion vom Mischgliedausgang bis zum Eingang des Korrekturgliedes (K bzw. K') und durch die Übertragungsfunktion des ersten Filters (FI1) bei störgrößenkompensierender Aufschaltung bzw. die Übertragungsfunktion des zweiten Filters (FI2) bei störgrößenausblendender Aufschaltung bestimmt ist.

4. Einrichtung nach Anspruch 3, **dadurch gekennzeichnet,** daß der Störgrößenbeobachter einen weiteren Integrator (6) zur Nachbildung des Gleichanteils des vom Mischglied (M) selektierten Signals (z') enthält, wobei das Ausgangssignal dieses Integrators störgrößenkompensierend dem Summierglied (1) zugeführt ist.

5. Einrichtung zur Durchführung des Verfahrens nach Anspruch 1 bei der Lageregelung eines unwuchtbehafteten elektromagnetisch gelagerten Rotor in zwei zueinander senkrechten Achsen (x,y), **dadurch gekennzeichnet** daß für jede Achse jeweils
   a) ein Regler (3x,3y) mit zugeordnetem Stellglied (4x,4y) sowie eine Meßeinrichtung für die Regelgröße vorhanden sind und die Eingangsgröße ($u_x$ bzw. $u_y$) des Stellgliedes über ein erstes Filter und die Ausgangsgröße der Regelstrecke über ein zweites Filter einem Mischglied ($M_x$ bzw. $M_y$) zugeführt werden, wobei die Übertragungsfunktion des ersten Filters gleich dem Produkt der Übertragungsfunktion des zweiten Filters und der Übertragungsfunktion vom Eingang des Stellgliedes bis zum Ausgang der Regelstrecke bemessen ist; und daß
   b) das Ausgangssignal des der einen Achse zugeordneten Mischgliedes und das Ausgangssignal des der anderen Achse zugeordneten Mischgliedes jeweils mit den Ausgangssignalen zweier frequenzgesteuerter Funktionsgeneratoren (FG1,FG2) für den Real- bzw. Imaginärteil des Korrekturfrequenzganges ($F_K(j\omega)$) unter Verwendung von zwei Multiplizierern amplitudengewichtet ist, sowie die addierten Ausgangssignale der beiden Multiplizerer störgrößenkompensierend der Eingangsgröße des Stellgliedes mittels Summierglieder (1x,1y) aufgeschaltet sind, wobei der komplexe Korrekturfrequenzgang ($F_K(j\omega)$ bzw. $F_{K'}(j\omega)$) durch die Übertragungsfunktion vom Mischgliedausgang bis zum Eingang des Korrekturgliedes (K bzw. K') und durch die Übertragungsfunktion des ersten Filters (FI1) bei störgrößenkompensierender Aufschaltung bzw. die Übertragungsfunktion des zweiten Filters (FI2) bei störgrößenausblendender Aufschaltung bestimmt ist.

6. Einrichtung zur Durchführung des Verfahrens nach Anspruch 1 bei der Positionsregelung für die Anstellung von Walzengerüsten, unter Verwendung eines einen Störgrößenbeobachter enthaltenden walzenexzentrizitätskompensators mit Oszillatoren in Form von jeweils zwei in Reihe angeordneten, rückgekoppelten Integratoren (17,18 bzw. 19,20), **dadurch gekennzeichnet,** daß das Eingangssignal des Positionsreglers über ein erstes Filter (FI1) und die Ausgangsgröße der Regelstrecke über ein zweites Filter (FI2) einem Mischglied zugeführt wird, wobei die Übertragungsfunktion (F1) des ersten Filters gleich dem Produkt aus der Übertragungsfunktion ($F_s$) des Positionsregelkreises und der Übertragungsfunktion (F2) des zweiten Filters bemessen ist, und daß die Ausgangsuenzgesteuerten Funktionsgeneratoren (FG1, FG2) für Real- bzw. Imaginärteil des Korrekturfrequenzganges beaufschlagt sind und die Summe der Ausgangsignale der Multiplizierer dem Sollwert (S*) des Positionsreglers aufgeschaltet ist und wobei der komplexe Korrekturfrequenzgang ($F_K(j\omega)$ bzw. $F_{K'}(j\omega)$) durch die Übertragungsfunktion vom Mischgliedausgang bis zum Eingang des Korrekturgliedes (K bzw. K') und durch die Übertragungsfunktion des ersten Filters (FI1) bei störgrößenkompensierender Aufschaltung bzw. die Übertragungsfunktion des zweiten Filters (FI2) bei störgrößenausblendender Aufschaltung bestimmt ist.

7. Einrichtung nach einem der Ansprüche 3 bis 5, **dadurch gekennzeichnet,** daß die Übertragungsfunktion des zweiten Filters (FI2, FI2$_x$, FI2$_y$) im Zähler den Nenner der Übertragungsfunktion der Regelstrekke (5, 5x, 5y) enthält.

8. Einrichtung nach einem der Ansprüche 3 bis 5 oder 7, **dadurch gekennzeichnet,** daß das zweite Filter (FI2) eine zur Unterdrückung von Störungen (MST) bei der Messung der Ausgangsgröße der Regelstrecke geeignete Übertragungsfunktion aufweist.

**9.** Einrichtung nach Anspruch 4, **dadurch gekennzeichnet,** daß auf die Eingänge der Integratoren (6 - 8) ein jeweils dem Fehlersignal (e) des Störgrößenbeobachters proportionales Signal zu deren Nachführung aufgeschaltet ist, wobei dieses Nachführsignal nur bei dem Integrator (7), welcher den Grundschwingungsanteil des selektierten Signals (z') nachbildet, frequenzbewichtet zur Wirkung gebracht ist und der Nachführkoeffizient ($h_0$) des den Gleichanteil nachbildenden Integrators (6) gleich dem Quotienten ($h_2/h_1$) der beiden anderen Nachführkoeffizienten ist.

**10.** Einrichtung nach Anspruch 9, **dadurch gekennzeichnet,** daß für die Nachbildung einer (n-1)ten Oberschwingung der Störgrößenbeobachter ein weiteres Integratorpaar (7', 8') samt zugehörigen frequenzgesteuerten Funktionsgeneratoren ($FG1_n$, $FG2_n$) aufweist und auf die Eingänge sämtlicher Integratoren ein weiteres, dem Fehlersignal (e) mit einem von der Ordnung der Oberschwingung abhängigen Faktor ($h_n$) proportionales Nachführsignal aufgeschaltet ist, wobei dieses Signal bei den beiden jeweils das phasenvoreilende Signal nachbildenden Integratoren (8, 8') frequenzbewichtet und bei den beiden anderen Integratoren (7, 7') mit dem Nachführkoeffizienten ($h_0$) des den Gleichanteil nachbildenden Integrators (6) bewichtet zur Wirkung gebracht ist.

**11.** Einrichtung nach einem der Ansprüche 3, 6 oder 10, **dadurch gekennzeichnet,** daß mindestens die Funktionsgeneratoren (FG1, FG2, $FG1_n$, $FG2_n$) mittels eines digitalen Signalprozessors realisiert sind.

**12.** Einrichtung nach einem der Ansprüche 3, 6 oder 10, **dadurch gekennzeichnet,** daß als Funktionsgenerator jeweils ein digitaler Festwertspeicher (ROM) verwendet ist, welcher von einem digitalisierten Frequenzwert ($\omega$) adressierbar ist und in dem feinstufig die frequenzabhängigen Werte von Real- bzw. Imaginärteil des Korrekturfrequenzgangs ($F_K(j\omega)$) abgelegt sind.

**Claims**

**1.** A method for eliminating the influence of periodic disturbance variables with a known variable frequency, which acts in particular in control loops between the final controlling element and the controlled system, characterised in that

   a) a first signal, picked off before the location of application of the disturbance variable (z), having a negative direction of action is supplied to a mixing element (M) by way of a first filter and a second signal picked off after the location of application of the disturbance variable is supplied by way of a second filter, wherein the transfer functions of the first and the second filter are proportioned so that one signal which is only dependent on the disturbance variable (z) forms and in that

   b) at least the fundamental wave component of the selected signal (z') and a signal, which is 90° phase-leading relative to this, are amplitude-weighted in a correction element (K,K') with the real or imaginary part of a complex correction frequency operation ($F_K(j\omega)$ or $F_K(j\omega)$), which real or imaginary parts are prepared there in each case, dependent on the frequency, and either calculated or deposited in a memory ready to be called up, and the sum of these signals (z'') can be applied either compensating for the disturbance variable before the location of application of the first signal or blanking-out the disturbance variable after the location of application of the second signal, wherein the complex correction frequency operation ($F_K(j\omega)$ or $F_K \cdot (j\omega)$) is determined by the transfer function from the mixing element output to the input of the correction element (K or K') and by the transfer function of the first filter (FI1) when applied for compensating for the disturbance variables or the transfer function of the second filter (FI2) when applied for blanking-out the disturbance variables.

**2.** A method according to claim 1, characterised in that the steady part ($z_ö$) of the selected signal (z') is applied in a manner so as to compensate for the disturbance variable before the location of application of the first signal.

**3.** A device for carrying out the method according to claim 1 or 2, characterised by the following features:

   a) the input variable (u) of the final controlling element acts with a negative direction of action by way of a first filter (FI1) and the output variable (y) of the controlled system acts by way of a second filter (FI2) on a mixing element (M), wherein the transfer function ($F_1$) of the first filter is proportioned to be the same as the product from the transfer function ($F_2$) of the second filter and the transfer function from the input of the final controlling element to the output of the controlled system,

   b) in order to simulate sine and cosine components of the fundamental wave of the output signal (Z') of the mixing element (M), the correction element (K) comprises a disturbance variable observer, controlled by the correction element, with two integrators (7,8) arranged in series and fed back to an oscillation element, the output signals of which integrators are supplied in each case to a multiplier (11,12), wherein the other inputs of the multipliers are acted upon by frequency-controlled function generators (FG1, FG2) for the real or imaginary part of the correction frequency operation ($F_K(j\omega)$,$F_K$-($j\omega$)) and the sum of the output signals of the two multipliers are supplied to a summing element for the purpose of compensation of disturbance variables and wherein the complex correction frequency operation ($F_K(j\omega)$ or $F_K \cdot (j\omega)$) is determined by the transfer function from the mixing element output to the input of the correction element (K or K') and by the transfer function of the first filter (FI1) when applied for compensating for the disturbance variables or the transfer function of the second filter (FI2) when applied for blanking-out the disturbance variables.

4. A device according to claim 3, characterised in that the disturbance variable observer comprises a further integrator (6) for simulating the steady part of the signal (z') selected by the mixing element (M), wherein the output signal of this integrator is supplied to the summing element (1) in a manner so as to compensate for disturbance variables.

5. A device for carrying out the method according to claim 1, in the position control of an electromagnetically supported rotor, subject to being out-of-balance, in two axes (x,y) perpendicular relative to each other, characterised in that for each axis

a) a controller (3x,3y) with an associated final controlling element (4x,4y) as well as a measuring device for the control variable are in each case present and the input variable ($u_x$ or $u_y$) of the final controlling element is supplied by way of a first filter and the output variable of the controlled system is supplied by way of a second filter to a mixing element ($M_x$ or $M_y$), wherein the transfer function of the first filter is proportioned to be the same as the product of the transfer function of the second filter and the transfer function from the input of the final controlling element to the output of the controlled system, and in that

b) the output signal of the mixing element associated with one axis and the output signal of the mixing element associated with the other axis is in each case amplitude-weighted with the output signals of two frequency-controlled function generators (FG1, FG2) for the real or imaginary part of the correction frequency operation ($FK(j\omega)$ using two multipliers, and the added output signals of the two multipliers modulate the input variable of the final controlling element, compensating for the disturbance variables, by means of summing elements (1x, 1y), wherein the complex correction frequency operation ($F_K(j\omega)$ or $F_K \cdot (j\omega)$) is determined by the transfer function from the mixing element output to the input of the correction element (K or K') and by the transfer function of the first filter (FI1) when applied for compensating for the disturbance variables or the transfer function of the second filter (FI2) when applied for blanking-out the disturbance variables.

6. A device for carrying out the method according to claim 1, in the position control for the adjustment of roller frames, using a roller eccentricity compensator containing a disturbance variable observer, with oscillators in the form of in each case two fedback integrators (17,18 or 19,20), arranged in series, characterised in that the input signal of the position controller is supplied by way of a first filter (FI1) and the output variable of the controlled system is supplied by way of a second filter (FI2) to a mixing element, wherein the transfer function (F1) of the first filter is proportioned to be the same as the product from the transfer function ($F_s$) of the position control loop and the transfer function (F2) of the second filter, and in that the output frequency-controlled function generators (FG1,FG2) are acted upon for the real or imaginary part of the correction frequency operation and the sum of the output signals of the multipliers modulates the desired value (S*) of the position controller and wherein the complex correction frequency operation ($F_K(j\omega)$ or $F_K \cdot (jw)$) is determined by the transfer function from the mixing element output to the input of the correction element (K or K') and by the transfer function of the first filter (FI1) when applied for compensating for the disturbance variables or the transfer function of the second filter (FI2) when applied for blanking-out the disturbance variables.

7. A device according to one of claims 3 to 5, characterised in that the transfer function of the second filter (FI2, $FI2_x$, $FI2_y$) comprises in the numerator the denominator of the transfer function of the controlled system (5, 5x, 5y).

8. A device according to one of claims 3 to 5 or 7, characterised in that the second filter (FI2) has a transfer function suitable for suppressing disturbances (MST) in the measurement of the output variable of the controlled system.

**9.** A device according to claim 4, characterised in that applied to the inputs of the integrators (6-8) there is in each case a signal proportional to the error signal (e) of the disturbance variable observer for its correction, wherein this correcting signal only becomes effective in a frequency-weighted manner with the integrator (7) which simulates the fundamental wave component of the selected signal (z'), and the correcting coefficient ($h_0$) of the integrator (6) simulating the steady component is equal to the quotient ($H_2$,$H_1$) of the two other correction coefficients.

**10.** A device according to claim 9, characterised in that, for the simulation of an (n-1)th harmonic component, the disturbance variable observer has a further pair of integrators (7',8') together with associated frequency-controlled function generators ($FG1_n$, $FG2_n$) and applied to the inputs of all integrators there is a further correcting signal proportional to the error signal (e) with one factor ($h_n$) dependent on the order of the harmonic component, wherein this signal is frequency-weighted with the two integrators (8,8') simulating in each case the phase-leading signal, and becomes effective in a weighted manner with the two other integrators (7,7') with the correcting coefficient ($h_0$) of the integrator (6) simulating the steady component.

**11.** A device according to one of claims 3,6, or 10, characterised in that at least the function generators (FG1, FG2, $FG1_n$, $FG2_n$) are realised by means of a digital signal processor.

**12.** A device according to one of claims 3,6, or 10, characterised in that used as function generator in each case there is a digital read-only memory (ROM), which is able to be addressed by a digitised frequency value ($\omega$) and in which in fine steps the frequency-dependent values of the real or imaginary part of the correction frequency operation ($F_K(j\omega)$) are stored.

**Revendications**

**1.** Procédé pour éliminer l'influence de grandeurs parasites périodiques possédant une fréquence variable connue, qui agissent notamment dans des circuits de réglage entre le circuit de réglage et la section de réglage, caractérisé par le fait que
   a) un premier signal, qui est prélevé en amont du point d'application de la grandeur parasite (z) est envoyé avec un sens d'action négatif, par l'intermédiaire d'un premier filtre, et un second signal prélevé en aval du point d'application de la grandeur parasite est envoyé par l'intermédiaire d'un second filtre à un circuit mélangeur (M), les fonctions de transfert des premier et second filtres étant dimensionnées de manière qu'apparaisse un signal dépendant uniquement de la grandeur parasite (z), et que
   b) au moins la composante oscillatoire de base du signal sélectionné (z') et un signal, qui est en avance de phase de 90° par rapport au précédent, sont pondérés en amplitude dans un circuit de correction (K,K'), avec la partie réelle ou la partie imaginaire, préparée dans ce circuit respectivement en fonction de la fréquence et calculée ou mémorisée à l'état prêt dans une mémoire, d'une réponse en fréquence de correction complexe ($F_K(j\omega)$,$F_{K'}(j\omega)$) et la somme de ces signaux (z'') peut être appliquée soit de manière à compenser la grandeur parasite, en amont du point de prélèvement du premier signal, soit de manière à supprimer la grandeur parasite en aval du point de prélèvement du second signal, la réponse en fréquence de correction complexe ($F_K(j\omega)$,$F_{K'}(j\omega)$) étant déterminée par la fonction de transfert de la sortie du circuit mélangeur jusqu'à l'entrée du circuit de correction (K ou K') et par la fonction de transfert du premier filtre (FI1) lors de l'application réalisant une compensation de la grandeur parasite, ou par la fonction de transfert du second filtre (FI2) lors de l'application conduisant à la suppression de la grandeur parasite.

**2.** Procédé suivant la revendication 1, caractérisé par le fait que la composante continue ($z''_0$) du signal sélectionné (z') est appliquée, de manière à compenser la grandeur parasite, en amont du point de prélèvement du premier signal.

**3.** Dispositif pour la mise en oeuvre du procédé suivant la revendication 1 ou 2, caractérisé par les particularités suivantes :
   a) la grandeur d'entrée (u) du circuit de réglage charge avec un sens d'action négatif, par l'intemédiaire d'un premier filtre (FI1), et la grandeur de sortie (y) de la section de réglage charge, par l'intermédiaire d'un second filtre (FI2), un circuit mélangeur (M), la fonction de transfert ($F_1$) du premier filtre étant choisie égale au produit de la fonction de transfert ($F_2$) du second filtre par la fonction de transfert de l'entrée du circuit de réglage jusqu'à la sortie de la section de réglage;

b) pour la simulation des composantes de sinus et cosinus de l'oscillation de base du signal de sortie (z') du circuit mélangeur (M), le circuit de correction (K) comporte un dispositif d'observation de la grandeur parasite, commandé par ce circuit et comportant deux intégrateurs (7,8) branchés en série, couplés par réaction à un circuit oscillateur et dont les signaux de sortie sont envoyés à des multiplicateurs respectifs (11,12), tandis que les autres entrées des multiplicateurs sont chargées par des générateurs de fonction (FG1, FG2), qui sont commandés en fréquence, pour la partie réelle et la partie imaginaire de la réponse en fréquence de correction ($F_K(j\omega), F_{K'}(j\omega)$), et la somme des signaux de sortie des deux multiplicateurs est envoyée, pour l'application de la grandeur parasite, à un circuit additionneur, et que la réponse en fréquence de correction complexe ($F_K(j\omega)$ ou $F_{K'}(j\omega)$) est déterminé par la fonction de transfert de la sortie du circuit mélangeur jusqu'à l'entrée du circuit de correction (K ou K') et par la fonction de transfert du premier filtre (FI1) dans le cas d'une application avec compensation de la grandeur parasite, ou par la fonction de transfert du second filtre (FI2) dans le cas d'une application avec suppression de la grandeur parasite.

4. Dispositif suivant la revendication 3, caractérisé par le fait que le dispositif d'observation de la grandeur parasite comporte un autre intégrateur (6) servant à simuler la composante continue du signal (z') sélectionné par le circuit mélangeur (M), le signal de sortie de cet intégrateur étant envoyé au circuit additionneur (1) de manière à réaliser une compensation de la grandeur parasite.

5. Dispositif pour la mise en oeuvre du procédé suivant la revendication 1, dans le cas de la régulation de position d'un rotor affecté d'un balourd et supporté par les moyens électromagnétiques, suivant deux axes (x,y) perpendiculaires entre eux, caractérisé par le fait que pour chaque axe

a) il est prévu respectivement un régulateur (3x,3y), auquel est associé un circuit de réglage (4x,4y) ainsi qu'un dispositif de mesure pour la grandeur de réglage, et la grandeur d'entrée ($u_x$ ou $u_y$) du circuit de réglage est envoyée par l'intermédiaire d'un premier filtre et la grandeur de sortie de la section de réglage par l'intermédiaire d'un second filtre à un circuit mélangeur ($M_x$ ou $M_y$), la fonction de transfert du premier filtre étant choisie égale au produit de la fonction de transfert du second filtre par la fonction de transfert de l'entrée de circuit de réglage jusqu'à la sortie de la section de réglage; et que

b) le signal de sortie du circuit mélangeur associé à un axe et le signal de sortie du circuit mélangeur associé à l'autre axe sont pondérés en amplitude respectivement par les signaux de sortie de deux générateurs de fonctions (FG1, FG2) commandés en fréquence, pour la partie réelle et la partie imaginaire de la réponse en fréquence de correction ($F_K(j\omega)$) moyennant l'utilisation de deux multiplicateurs, et les signaux de sortie additionnés des deux multiplicateurs sont appliqués, de manière à réaliser une compensation de la grandeur parasite, à la grandeur d'entrée du circuit de réglage au moyen de circuits additionneurs (1x,1y), la réponse en fréquence de correction complexe ($F_K(j\omega)$ ou $F_{K'}(j\omega)$) est déterminée par la fonction de transfert de la sortie du circuit mélangeur jusqu'à l'entrée du circuit de correction (K ou K') et par la fonction de transfert du premier filtre (FI1) dans le cas de l'application réalisant une compensation de la grandeur parasite, ou par la fonction de transfert du second filtre (FI2) dans le cas d'une application réalisant une suppression de la grandeur parasite.

6. Dispositif pour la mise en oeuvre du procédé suivant la revendication 1 lors de la régulation de position pour le réglage de cages de laminoirs, moyennant l'utilisation d'un compensateur d'excentrement des cylindres, qui comporte un dispositif d'observation de grandeurs parasites et comporte des oscillateurs se présentant respectivement sous la forme de deux intégrateurs (17,18 ou 19,20) couplés par réaction et branchés en série, caractérisé par le fait que le signal d'entrée du régulateur de position est envoyé par l'intermédiaire d'un premier filtre (FI) et la grandeur de sortie de la section de réglage par l'intermédiaire d'un second filtre (FI2) à un circuit mélangeur, la fonction de transfert (F1) du premier filtre étant choisie égale au produit de la fonction de transfert ($F_s$) du circuit de réglage de position par la fonction de transfert (F2) du second filtre, et que les signaux de sortie des intégrateurs sont envoyés à des multiplicateurs respectifs, tandis que les deux entrées des multiplicateurs sont chargées par des générateurs de fonctions (FG1,FG2) commandés en fréquence pour la partie réelle et la partie imaginaire de la réponse en fréquence de correction, et la somme des signaux de sortie des multiplicateurs est appliquée à la valeur de consigne (S*) du régulateur de position, tandis que la

EP 0 407 628 B1

réponse en fréquence de correction complexe ($F_K(j\omega)$ ou $F_{K'}(j\omega)$) est déterminée par la fonction de transfert de la sortie du circuit mélangeur jusqu'à l'entrée du circuit de correction (K ou K') et par la fonction de transfert du premier filtre (FI1) dans le cas d'une application avec compensation de la grandeur parasite, ou par la fonction de transfert du second filtre (FI2) dans le cas d'une application qui supprime la grandeur parasite.

7. Dispositif suivant l'une des revendications 3 à 5, caractérisé par le fait que la fonction de transfert du second filtre (FI2, $FI2_x$, $FI2_y$) présente dans son numérateur le dénominateur de la fonction de transfert de la section de réglage (5, 5x, 5y).

8. Dispositif suivant l'une des revendications 3 à 5 ou 7, caractérisé par le fait que le second filtre (FI2) possède une fonction de transfert convenant pour la suppression de parasites (MST) lors de la mesure de la grandeur de sortie de la section de réglage.

9. Dispositif suivant la revendication 7, caractérisé par le fait qu'aux entrées des intégrateurs (6-8) est respectivement appliqué un signal proportionnel au signal d'erreur (a) du dispositif d'observation de la grandeur parasite, pour son asservissement, ce signal d'asservissement étant amené à agir, en étant pondéré en fréquence, uniquement dans l'intégrateur (7), qui simule la composante d'oscillation de base du signal sélectionné (z'), alors que le coefficient d'asservissement ($h_0$) de l'intégrateur (6) simulant la composante continue est égal au quotient ($h_2/h_1$) des deux autres coefficients d'asservissement.

10. Dispositif suivant la revendication 9, caractérisé par le fait que pour la simulation d'une (n-1)-ème oscillation harmonique, le dispositif d'observation de la grandeur parasite possède un autre couple d'intégrateurs (7',8') y compris les générateurs de fonctions associés ($FG1_n$, $FG2_n$), qui sont commandés en fréquence et qu'un autre signal d'asservissement, qui est proportionnel au signal d'erreur (e) avec un facteur ($h_n$) qui dépend de l'ordre de l'oscillation harmonique, est appliqué aux entrées de tous les intégrateurs, ce signal étant pondéré en fréquence dans les deux intégrateurs (8,8') qui simulent respectivement le signal qui est en avance de phase, et étant amené à agir dans les deux autres intégrateurs (7',8'), en étant pondéré par le coefficient d'asservissement ($h_0$) de l'intégrateur (6) qui simule la composante continue.

11. Dispositif suivant l'une des revendications 3, 6 ou 10, caractérisé par le fait qu'au moins les générateurs de fonctions (FG1, FG2, $FG1_n$, $FG2_n$) sont réalisés au moyen d'un processeur de signaux numérique.

12. Dispositif suivant l'une des revendications 3, 6 ou 10, caractérisé par le fait qu'on utilise, en tant que générateur de fonction, respectivement une mémoire morte numérique (ROM), qui peut être adressée par une valeur de fréquence numérisée ($\omega$) et dans laquelle les valeurs, qui dépendent de la fréquence, de la partie réelle et de la partie imaginaire de la réponse en fréquence de correction ($F_K(j\omega)$) sont mémorisées d'une manière finement étagée.

14

$$F_K = \frac{1}{F_1 \cdot F_c} = \frac{1}{\hat{F}_a \cdot \hat{F}_b \cdot F_2 \cdot F_c} \qquad\qquad F_{K'} = \frac{1}{F_2 \cdot F_c}$$

FIG 1

15

FIG 2

FIG 3

EP 0 407 628 B1

**FIG 5**

**FIG 4**

$$\hat{F}_S = \frac{\hat{F}_R \cdot \hat{F}_{ST}}{1 + \hat{F}_R \cdot \hat{F}_{ST}}$$

FIG 6